# EUROPEAN PATENT APPLICATION

(11) **EP 1 589 743 A2**
(43) Date of publication of application: **26.10.2005**
(21) Application number: 05102123.6
(22) Date of filing: 17.03.2005
(51) Int. Cl.: H04N 1/00, H04N 1/21

(54) **Photographic control method and mobile terminal**

(30) Priority: 23.04.2004 JP 2004128193
(71) Applicant: KABUSHIKI KAISHA TOSHIBA, Tokyo 105-8001 (JP)
(72) Inventor: YUKI, Yoshinori, Tokyo (JP)
(74) Representative: Henkel, Feiler & Hänzel

(57) **Abstract**

The present invention provides a photographic control method and a mobile terminal capable of shortening the time period from when an object is in a desired state until the object is photographed, without using a shutter key capable of both half-depressed and fully depressed operations. When an inputting device key is operated, an identifier of this key-operation is notified to an image processor of the device (Step S13), and when this operation is the depressing of a prescribed shutter key ("Shutter Key Depression" of Step S14), the image processor sets a photographic condition (Step S15). Next, when the releasing of the prescribed shutter key being depressed is notified to the image processor ("Shutter Key Release" of Step S16 and Step S17), the image processor takes a photograph (Step S19).

## Description

### CROSS-REFERENCE TO RELATED APPLICATION

This application is based upon and claims the benefit of priority from the prior Japanese Patent Application No. 2004-128193, filed on April 23, 2004; the entire contents of which are incorporated herein by reference.

### BACKGROUND OF THE INVENTION

### 1. Field of the Invention

The present invention relates to a photographic control method and a mobile terminal, and more particularly to photographic control for photographing an object with a short delay after a shutter button is depressed.

### 2. Description of the Related Art

In a camera device, which captures a photograph as digital data, photographic conditions, such as photograph resolution set by a user, and conditions, such as the aperture calculated by a processor of the camera device, are set by pressing the shutter button half way, and an object is captured with the set by pressing the shutter button to the capturing position. Note that the above-described technique is disclosed in Japanese Patent Application Laid-open No. 2003-259201 (Tanaka et al.).

Even if the object to be captured is moving, the user can set up the photographic conditions to the camera device to press the shutter button halfway while observing the movement of the object. Accordingly, it is possible to capture the object image in a short delay after the shutter button is depressed.

However, in the method disclosed in Tanaka et al., a special dedicated shutter key, which is capable of both a half-depressed and a fully depressed operation, is required. However, the problem was that, for example, a mobile communications terminal is compact, and must comprise numeric keys from "1" to "9" plus "0", which are used to input the telephone number, plus several other function keys needed to control communications functions, and providing a dedicated shutter key was difficult.

Meanwhile, in a mobile communications terminal in which the operating mode changes from a communications mode to a photographic mode in accordance with depressing a prescribed key, it is known that the same key is used for different purposes in a communications mode and in a photographic mode. And then, a key, which is used for a prescribed control of a communications function in a communications mode, is used as the shutter key in a photographic mode. Note that the above- described technique is disclosed in Japanese Patent Application Laid-open No. 2002-141978 (Somei).

Further, in the method disclosed in Somei, first of all, the above-mentioned photographic conditions are set by depressing the shutter key one time, and capturing an object image is performed after this setting is complete. Consequently, it took a long time to capture the object image after the shutter button is depressed.

### SUMMARY OF THE INVENTION

It is an object of the present invention to solve the above-mentioned problems, and to provide a photographic control method and mobile terminal capable of shortening the time period from when an object is in the desired state until the object is photographed without using a special shutter key by which both half-depressed and fully depressed operations are possible.

To realize the above-mentioned object, an aspect of the present invention provides a photographic control method of a mobile terminal, which comprises an imaging section, a display section and a plurality of key operating sections including a photographing command key, the method comprising: detecting the depressing of the photographing command key; setting photographic conditions when the depressing is detected; and photographing by the imaging section in accordance with the set photographic conditions when the photographing command key is released.

In accordance with the present invention, it is possible to shorten the time period from when an object is in a desired state until the object is photographed without using a special dedicated shutter key capable of both half-depressed and fully depressed operations.

### BRIEF DESCRIPTION OF THE DRAWINGS

Figs. 1A, 1B and 1C are external views of a mobile communications terminal related to an embodiment of the present invention;
Fig. 2 is a block diagram showing the constitution of a mobile communications terminal related to the embodiment of the present invention;
Fig. 3 is a block diagram showing the constitution of an image processor related to the embodiment of the present invention; and
Fig. 4 is a flowchart for an image processing controller related to the embodiment of the present invention.

### DETAILED DESCRIPTION OF THE INVENTION

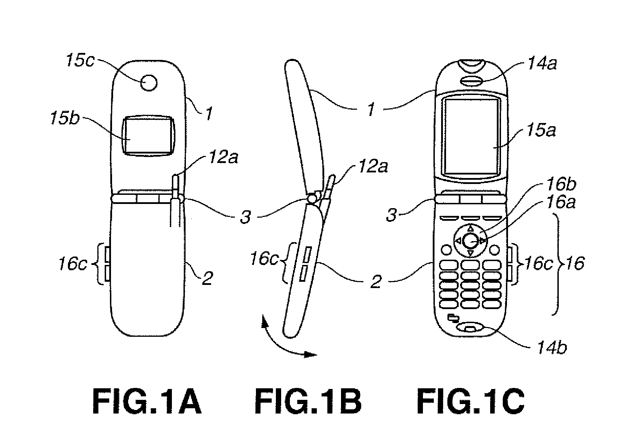

Embodiments of a photographic control method and a mobile terminal according to the present invention will be explained hereinbelow by referring to the figures. Fig. 1 is a diagram showing the exterior view of a foldable mobile communications terminal when the upper and lower portions of the body are unfolded and open, to which a photographic control method and mobile terminal related to the embodiment of the present invention have been applied. Fig. 1A shows a rear view, Fig. 1B shows a side view, and Fig. 1C shows a front view, respectively.

This mobile communications terminal has an upper body 1 and a lower body 2 , and the upper body 1 and the lower body 2 is pivotally connected via a hinge portion 3.

On the inside surface of the upper body 1, there are installed a speaker 14a for outputting voice, and a front display 15a, which comprises an LCD (Liquid Crystal Display), for displaying operation prompts, the contents of user instructions, and the operating mode of the device. Further, on the outside surface of the upper body 1, there are installed a rear display 15b, which comprises an LCD for displaying the operating mode of the terminal, and a camera 15c.

Further, a microphone 14b for inputting voice is installed on the inside surface of the lower body 2. An inputting device 16 comprising a keypad is provided on the inside surface and side of the lower body 2. Further, an antenna 12a utilized for sending and receiving radio waves is installed on the outside surface of the lower body 2.

The inputting device 16 is installed on the inside surface of the lower body 2, and has a central warp key 16a, which is utilized for instructing decisions and selections using the various functions; a cross-shaped warp key 16b, which is installed adjacent to the central warp key 16a, and encircles the central warp key 16a, and is utilized for scrolling a display on the front display 15a; numeric keys, which are utilized for inputting alphanumerics, characters, and symbols; a plurality of function keys, which is utilized for inputting operating instructions such as those for turning the power supply of the mobile communications terminal ON and OFF; and a plurality of side keys 16c, which is installed on the side of the lower body 2.

In addition, an open/closed detector (not shown in the figure) for detecting if the upper and lower bodies 1, 2 are in the open state or in the closed state is installed in the hinge section 3, and an open/closed signal is outputted from this open/closed detector.

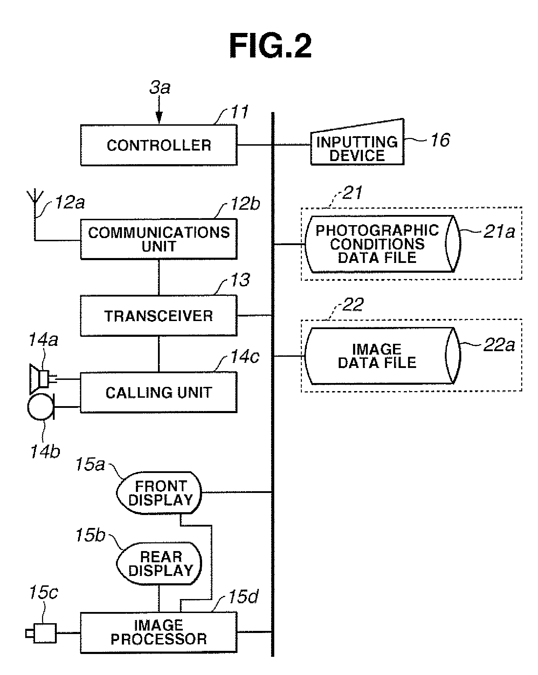

Fig. 2 is a block diagram showing the constitution of this mobile communications terminal. This mobile communications terminal comprises a controller 11 via which an open/closed signal 3a is inputted and which controls the entire device; an antenna 12a for sending and receiving radio signals with a base station (not shown); a communications unit 12b; a transceiver 13; a speaker 14a; a microphone 14b; a calling unit 14c; a front display 15a; a rear display 15b; a camera 15c; an image processor 15d; an inputting device 16; a photographic condition data storage unit 21; and an image data storage unit 22.

A photographic condition data file 21 a, which is the conditions for when the image processor 15d takes a photograph, is stored in the photographic condition storage unit 21. Further, an image data file 22a is stored in the image data storage unit 22. Furthermore, an image data file 22a can be compressed image data. As for the compression format, compression techniques such as JPEG (Joint Photographic Expert Group) and GIF (Graphical Interchange Format) can be used.

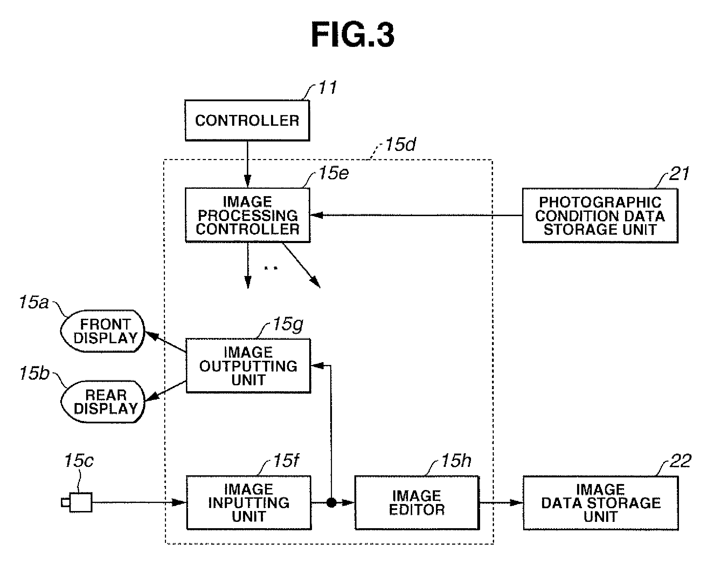

Fig. 3 is a block diagram showing the constitution of the image processor 15d. The image processor 15d comprises an image processing controller 15e, which is connected to the controller 11 and the photographic condition data storage unit 21, and which controls each unit of the image processor 15d; an image inputting unit 15f, which is connected to the camera 15c; an image outputting unit 15g, which is connected to the front display 15a, the rear display 15b, and the image inputting unit 15f; and an image editor 15h, which is connected to the image data storage unit 22 and the image inputting unit 15f.

The operation of each unit of a mobile communications terminal related to the embodiment of the present invention, which is constituted as described hereinabove, will be explained by referring to Fig. 2.

Firstly, the communications unit 12b outputs a high-frequency signal received via the antenna 12a to the transceiver 13, and a high-frequency signal outputted from the transceiver 13 is transmitted via the antenna 12a.

The transceiver 13 amplifies, performs frequency conversion, and demodulates a high-frequency signal from the communications unit 12b, sends the digital voice signal obtained as a result of this to the calling unit 14c, and sends a control signal to the controller 11. In addition, the transceiver 13 also modulates, performs frequency conversion, and amplifies the digital voice signal outputted from the calling unit 14c, and the control signal outputted from the controller 11 to produce a high-frequency signal, which it sends to the communications unit 12b.

Next, the calling unit 14c converts a digital voice signal outputted from the transceiver 13 to an analog voice signal, amplifies it, and sends it to the speaker 14a. It also amplifies the analog voice signal outputted from the microphone 14b, converts it to a digital voice signal and sends it to the transceiver 13.

The operation of the front display 15a will be explained next. The front display 15a displays characters, numerals and image data under the control of the controller 11 when the upper and lower bodies 1, 2 are in the open state. The data being displayed is switched in response to an input operation from the inputting device 16 or an incoming signal, and by receiving an instruction from the controller 11 in accordance with a display request from the image processor 15d.

Next, the operation of the rear display 15b will be explained. The rear display 15b displays characters, numerals and image data under the control of the controller 11 when the upper and lower bodies 1, 2 are in the closed state. The data being displayed is switched in response to an input operation from the inputting device 16 or an incoming signal, and by receiving an instruction from the controller 11 in accordance with a display request from the image processor 15d.

The camera 15c, for example, is a CCD camera, and an image inputting operation is performed when this camera 15c is started up by the image processor 15d, and sends an inputted image signal to the image processor 15d.

The inputting device 16 comprises keys, which include numeric keys for specifying the telephone number of a party being called, and a plurality of function keys, and when a key of the inputting device 16 is operated, the identifier of this key operation, that is, the identifier of this key and the identifier of the type of operation are notified to the controller 11, and in accordance with the controller 11, these identifiers are displayed on either the front display 15a or the rear display 15b as characters and numerals.

Further, when the mobile communications terminal is operating in the communications mode, that is, for example, while a user is talking to someone on the phone, or while there is an outgoing signal or an incoming signal, a character code, a numeric code, a control signal or an key-operation identifier is transmitted to the transceiver 13 by the controller 11. When the device is operating in the information processing mode, that is, for example, while a user is preparing or searching for data stored in a telephone book database (not shown), a character code, numeric code or control signal is transmitted to a telephone book database management unit (not shown in the figure) by the controller 11.

In addition, when the mobile communications terminal is operating in the photographic mode, that is, for example, while a user is taking a photograph, a character code, numeric code, control signal or key-operation identifier is transmitted to the image processor 15d by the controller 11. Further, while a user is inputting a photographic condition, a character code, numeric code, or control signal is stored in the photography condition data file 21a by the controller 11.

Here, it is defined that each key has three states: "Depressed," "Continued Depression" and "Released." "Depressed" is a state where a key is being depressed. Further, "Continued Depression" is a state where a key is kept depressing after the "Depressed" state, and in this state key code of the depressed key and an identifier indicating the "Continued Depression" state are repeatedly notified to the controller at specific intervals. Furthermore, "Released" is a state where the depressed key is released.

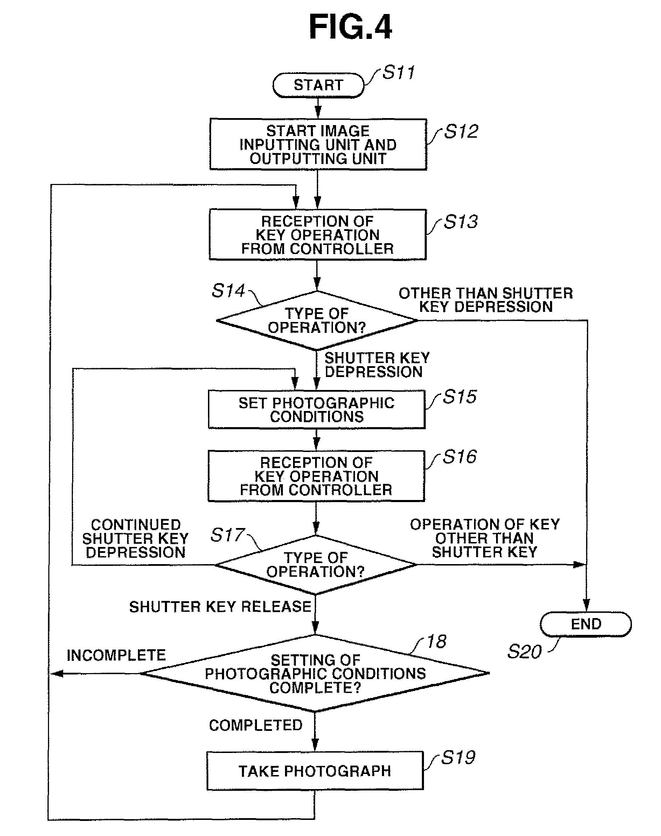

Next, the operation of the image processor 15d will be explained by referring to Fig. 2 and Fig. 3. The image processor 15d is a device for carrying out picture-taking processing of an image signal outputted from the camera 15c, and the operation of the image processor 15d will be explained by explaining the operation of the image processing controller 15e, which controls each unit of the image processor 15d. Fig. 4 is a flowchart showing the operation of this image processing controller 15e.

The image processing controller 15e begins operating when it is started up by the controller 11 in accordance with the operation of a prescribed key of the inputting device 16, and an instruction for the mobile communications terminal to carry out an operation in the photographic mode, that is, upon receiving a command to commence image processing (Step S11), and then the image processing controller 15e subsequently starts up the image inputting unit 15f and the image outputting unit 15g (Step S12).

The image inputting unit 15f receives an image signal outputted from the camera 15c, and sends this image signal to the image outputting unit 15g. When the image outputting unit 15g receives the image signal outputted from the image inputting unit 15f, it displays the image signal either on the front display 15a or the rear display 15b. As already explained, which display an image is displayed on is controlled by the controller 11 according to whether the upper and lower bodies 1, 2 are in the open state or in the closed state.

The image processing controller 15e next receives a key-operation identifier outputted from the controller 11 (Step S13). Then, it checks the identifier received in Step S 13, and determines whether or not this identifier specifies a shutter key "Depressed" operation (Step S14). Here, the shutter key is the central warp key 16a when the upper and lower bodies 1, 2 are in the open state, and is a prescribed side key 16c when the upper and lower bodies 1, 2 are in the closed state.

When the above-mentioned identifier indicates a shutter key "Depressed", the image processing controller 15e instructs the image inputting unit 15f and image editor 15h to set photographic conditions (Step S 15).

Photographic conditions can be divided into two types. First of all, the first type of photographic condition is a condition, which has either been rigidly established, or was decided beforehand in accordance with a user operating a prescribed key of the inputting device 16, and which is stored in the photographic condition data file 21a.

This first type of photographic condition comprises zoom magnification, the number of horizontal and vertical dots in a photographic image file stored in the image data file 22a, and the compressibility of this file. Here, the image inputting unit 15f is instructed to set the zoom magnification, and the image editor 15h is instructed to set the compressibility of this file.

Furthermore, the first type of photographic condition is not limited to the above. For example, this first type of photographic condition can also be the resolution of an image signal sent by the image inputting unit 15f, and can comprise a rough resolution suitable for when it is displayed on either the front display 15a or the rear display 15b, and a detailed resolution suitable for when it is to be stored in the image data file 22a. The image inputting unit 15f is instructed to set these resolutions.

Conversely, the second type of photographic condition is a condition that changes depending on the state of an object to be photographed. This second type of photographic condition comprises focusing on the object to be photographed dependent on the distance between the object and the mobile communications terminal, and determining the aperture and/or frame rate dependent on the brightness of the object. Here, instructions are issued to set these photographic conditions to be executed by the image inputting unit 15f.

Furthermore, the second type of photographic condition is not limited to the above. For example, a mobile communications terminal equipped with a strobe emitting device (not shown) can also comprise a condition for automatically determining, in accordance with the brightness of an image signal sent by the camera 15c, whether or not the image inputting unit 15f will cause the strobe emitting device to emit light when taking a photograph. And the setting for executing this automatic determination can also be instructed.

Further, the first type of photographic condition and the second type of photographic condition are not necessarily exclusive. For example, in the above explanation, whether or not the strobe-emitting device emits a light at photographing time was the second type of photographic condition, but it could also be a photographic condition, which is determined by a user operating a prescribed key of the inputting device 16, that is, a first type of photographic condition.

When the image inputting unit 15f finishes setting a photographic condition, a message to the effect that setup is complete is stored in a prescribed storage unit inside the image inputting unit 15f. Further, when the image editor 15h finishes setting a photographic condition, a message to the effect that setup is complete is stored in a prescribed storage unit inside the image editor 15h.

Next, the image processing controller 15e receives an identifier of a key operation outputted from the controller 11 (Step S16), and checks the identifier received via Step S16 (Step S17). The operation of this Step S16 is the same as the operation of Step S13, and, in addition, the operation of Step S17 is the same as the operation of Step S14.

In Step S17, when the received identifier specifies a shutter key "Continued Depression" operation, the image processing controller 15e returns to Step S15, and once again instructs the setup of a photographic condition. However, in instructing the setting of a photographic condition a second time, a setting instruction of the above-mentioned first type of photographic condition is not carried out. The setting of the second type of photographic condition, which changes as a function of the state of the object to be photographed, is instructed.

Furthermore, in Step S17, when the received identifier specifies a shutter key "Continued Depression", the image processing controller 15e can return to the operation of Step S16 for receiving a key-operation identifier without returning to the photographic condition setting operation of Step S15 as explained hereinabove.

Here, by returning to Step S15 and repeating the operation for instructing the setting of a photographic condition and subsequent operations, it is possible to properly change photographic conditions in accordance with changes in the state of the object to be photographed. For example, when the object is approaching the mobile communications terminal, it is possible to properly adjust the focus at all times. By contrast, by returning to Step S16 and repeating the operation for receiving a key-operation identifier and subsequent operations, it is possible to reduce the amount of power consumed without the image processing unit 15d repeating the photographic condition setting operation of Step S15.

In Step S17, when the received identifier indicates a shutter key "Released", the image processing controller 15e checks to determine whether or not the image inputting unit 15f has completed setting the photographic conditions by reading out the contents of a prescribed storage unit inside the image inputting unit 15f, and, in addition, checks to determine whether or not the image editor 15h has completed setting the photographic conditions by reading out the contents of a prescribed storage unit inside the image editor 15h (Step S18).

When either of the image inputting unit 15f or image editor 15h has completed setting photographic conditions ("Completed" in Step S18), the image processing controller 15e causes the image inputting unit 15f and image editor 15h to take a photograph (Step S19). That is, it causes the image inputting unit 15f to receive an image signal outputted from the camera 15c in accordance with the photographic conditions set in Step S15, and to send this image signal to the image editor 15h.

In addition, the image processing controller 15e starts up the image editor 15h, and cause the image editor 15h to receive the image signal sent from the image inputting unit 15f, and to edit this image signal in accordance with the photographic conditions set in Step S 15. Then, it causes the edited image signal to be stored in the image data file 22a. Next, it returns processing to the operation of Step S13 for receiving a key-operation identifier outputted from the controller 11, and carries out the next picture-taking operation.

Furthermore, when the quality of the photograph of the image signal edited by the image editor 15h in Step S 19 is inferior, for example, when the brightness of this image signal is less than a prescribed value, or greater than a prescribed value, the image editor 15h can discard this edited image signal without storing it in the image data file 22a. Accordingly, discontinuing a photograph despite the fact that a user depressed the shutter key to take the photograph can be easily achieved by covering the lens of the camera 15c.

In Step S 18, when at least one of the image inputting unit 15f and image editor 15h has not completed setting the photographic conditions ("Incomplete" in Step S18), the image processing controller 15e returns processing to the operation of Step S13 for receiving a key-operation identifier outputted from the controller 11, and carries out the next picture-taking operation.

Furthermore, when at the least one of the image inputting unit 15f and image editor 15h has not completed setting the photographic conditions ("Incomplete" in Step S18), the image processing controller 15e, by repeating the operation of Step S18 without returning to the operation of Step S13 for receiving a key-operation identifier outputted from the controller 11, can wait until either of the image inputting unit 15f or image editor 15h has completed setting photographic conditions, and then proceed on to Step S19.

Here, by returning to the operation of Step S13 for receiving an identifier outputted from the controller 11, it is possible, subsequent to a user depressing the shutter key one time to take a photograph of a certain object, to immediately discontinue taking a photograph of the above-mentioned object by releasing the shutter key prior to at the least one of the image inputting unit 15f and image editor 15h completing the photographic conditions setting, and taking a photograph of a different object in a few operations. Conversely, by repeatedly carrying out the operation of Step S18 it is possible to optimally shorten the time from shutter key depression until a photograph is taken.

Furthermore, subsequent to instructing the image inputting unit 15f and the image editor 15h to set photographic conditions in Step S15, the image processing controller 15e monitors predetermined storage units inside both of these parts, and when it detects that both of these parts have completed setting the photographic conditions, it can instruct the image outputting unit 15g to display either symbols or characters for displaying in a prescribed location of either the front display 15a or rear display 15b the fact that photographic condition setting has been completed.

When a key-operation identifier received in Step S 17 specifies the operation of a key other than the shutter key, the image processing controller 15e terminates the operations of the parts of the image processor 15d, and then ends its own operation (Step S20).

As keys other than the above-mentioned shutter key, a user can readily operate the cross-shaped warp key 16b adjacent to the shutter key (central warp key 16a) when the upper and lower bodies 1, 2 are in the open state, and the side key 16c other than the shutter key, which is adjacent to the shutter key (side key 16c) when the upper and lower bodies 1, 2 are in the closed state. Therefore, subsequent to depressing a shutter key and causing photographic conditions to be set, a user can terminate picture-taking by depressing a key adjacent to these shutter keys.

Further, when the above-mentioned operation is an operation of other than a shutter key, the image processing controller 15e can return to the operation of Step S13 for receiving a key-operation identifier from the controller 11, and carry out the next picture-taking operation. Accordingly, subsequent to depressing a shutter key one time to take a photograph of a certain object, a user can discontinue taking a photograph of this object by depressing a key adjacent to these shutter keys, and take a photograph of a different object in a few operations.

In Step S14, when a received identifier specifies an operation other than a shutter key "Depressed", the image processing controller 15e terminates the operations of the parts of the image processor 15d, and then ends its own operation (Step S20).

Furthermore, in the above explanation, it is explained that when the identifier received in Step S17 specifies a shutter key "Released", the image processing controller 15e causes a photograph to be taken in Step S19, and the key-operation identifier received subsequent thereto specifies an operation related to taking the next photograph, but the present invention is not limited to this.

For example, when an identifier, which specifies a shutter key "Depressed", is received from the controller 11 within a prescribed short period of time subsequent to a determination that an identifier received in Step S17 specified a shutter key "Released", the image processing controller 15e can instruct the image editor 15h to delete the photographic image file taken in Step S19 from the image data file 22a regardless of whether or not the photograph taken in Step S 19 was completed when the identifier specifying the above shutter key "Depressed" was received.

Or, when an identifier, which specifies a shutter key "Depressed", and an identifier, which specifies a shutter key "Released" are consecutively received within a prescribed short period of time subsequent to a determination that an identifier received in Step S 17 specified a shutter key "Released", similar to the operation explained hereinabove, the image processing controller 15e can instruct the image editor 15h to delete the taken photographic image file from the image data file 22a.

In accordance with these operations, when a user determines immediately subsequent to taking a photograph that it is not necessary for this photograph to be stored, it is possible for the user to immediately delete this taken photographic image file from the image data file 22a, making possible the effective utilization of the storage capacity of the image data storage unit 22.

In addition, in the above explanation, it is explained that when an identifier specifying a shutter key "Depressed" is received in Step S 13, and an identifier specifying a shutter key "Released" is received in Step S17, the image processing controller 15e gives instruction for a photograph to be taken in Step S19, but the present invention is not limited to this.

In accordance with a prescribed key of the inputting device 16 being operated by a user, the image processing controller 15e can change the above-mentioned operation, and when an identifier specifying a shutter key "Depressed" is received in Step S 13, can carry out operations up to giving instructions for a photograph to be taken in Step S 19 without making a determination as to whether or not an identifier specifying a shutter key "Released" was received in Step S17.

In addition, when an identifier specifying a prescribed first shutter key "Depressed" is received in Step S13, the image processing controller 15e can carry out operations from the instruction for setting the photographic conditions of Step S15 onward, and when an identifier specifying a prescribed second shutter key "Depressed" is received in Step S17, the image processing controller 15e can carry out operations up to giving instructions for a photograph to be taken in Step S19.

In this embodiment, the image processor 15d is treated as a device for taking a photograph, but the present invention is not limited to this. For example, it can also be a device for taking consecutive photographs (for taking photographs continuously for a prescribed interval of time). It can also be a device for shooting video. In these cases, the image processor 15d commences either consecutive photographs or video in accordance with a prescribed key-operation identifier being sent to the image processing controller 15e from the controller 11. When the image processor 15d is shooting video, the image editor, for example, stores data in the MPEG (Moving Picture Experts Group) format in the image data file 22a.

Further, the above explanation is given using as an example an aspect which applies the present invention to a mobile communications terminal, but it goes without saying that the present invention can also be applied to a PDA (Personal Data Assistant) or a portable personal computer. The present invention is not limited to the above constitution, and various modifications are possible.

## Claims

1. A photographic control method of a mobile terminal, which comprises an imaging section, a display section, and a plurality of key operating sections including a photographing command key, the method comprising:
detecting the depressing of the photographing command key;
setting photographic conditions if the depressing is detected; and
photographing by the imaging section in accordance with the set photographic conditions when the photographing command key is released.

2. The photographic control method according to Claim 1, wherein the photographic conditions comprise conditions, which are dependent on an image signal captured by the imaging section.

3. The photographic control method according to Claim 1, wherein, subsequent to the photographing command key being depressed, the photographing operation of the imaging section is stopped when the depressing of the photographing command key is released prior to the completion of the setting of the photographic conditions.

4. The photographic control method according to Claim 1, wherein, subsequent to the photographing command key being depressed, the photographing operation of the imaging section is stopped when a different key from the photographing command key is depressed prior to the depressing of this photographing command key being released.

5. The photographic control method according to Claim 1, wherein the captured image signal is deleted when the photographing command key is depressed within a prescribed elapsed time subsequent to the depressing of the photographing command key being released.

6. The photographic control method according to Claim 2, wherein, subsequent to completion of the setting of the photographic conditions, the setting of the photographic conditions is repeated when the depressing of the photographing command key continues prior to the depressing of the photographing command key being released.

7. A mobile terminal having an imaging section, a display section and a plurality of key operating sections including a photographing command key, the device comprising:
a detecting section which detects the depressing and releasing of the photographing command key;
a photographic condition setting section, which operates during depressing detection by the detecting section, and which determines photographic conditions of the imaging section; and
a photographic control section which operates the imaging section in accordance with the photographic conditions determined by the photographic condition setting section, if the releasing of the photographing command key is detected by the detecting section.
